# EUROPÄISCHE PATENTSCHRIFT

(11) **EP 3 487 613 B1**
(45) Veröffentlichungstag und Bekanntmachung des Hinweises auf die Patenterteilung: **06.12.2023**
(21) Anmeldenummer: 17745146.5
(22) Anmeldetag: 14.07.2017
(51) Int. Cl.: B01J 8/42, C01B 3/00, C01B 3/22

(54) **VERFAHREN ZUR DEHYDRIERUNG VON ORGANISCHEN MOLEKÜLEN**
METHOD FOR THE DEHYDROGENATION OF ORGANIC MOLECULES
PROCÉDÉ DE DÉSHYDROGÉNATION DE MOLÉCULES ORGANIQUES

(30) Priorität: 22.07.2016 DE 102016213455
(43) Veröffentlichungstag der Anmeldung: 29.05.2019
(73) Patentinhaber: Fraunhofer-Gesellschaft zur Förderung der angewandten Forschung e.V., 80686 München (DE)
(72) Erfinder: HORNUNG, Andreas, 76185 Karlsruhe (DE); SCHMETTERER, Clemens, 92237 Sulzbach-Rosenberg (DE); DOMMEL,Daniela, 91586 Lichtenau (DE)
(86) Internationale Anmeldenummer: PCT/EP2017/067816
(87) Internationale Veröffentlichungsnummer: WO 2018/015286

(56) Entgegenhaltungen:
- WO-A1-2016/096744
- DE-A1-102013 203 892
- DE-A1-102013 214 313
- US-A- 5 563 314
- US-A1- 2012 164 034

## Beschreibung

Die vorliegende Anmeldung handelt von einem Verfahren zur Dehydrierung von organischen Molekülen, einen Reaktionsbehälter unter anderem geeignet zur Durchführung des Verfahrens und der Verwendung von einem spezifischen Material zur Dehydrierung von organischen Molekülen.

Die Dehydrierung von organischen Molekülen beispielsweise von C-C-Einfachbindungen oder C-C-Doppelbindungen ist grundsätzlich bekannt. Hier werden, vor allem im großtechnischen Maßstab, häufig feste Katalysatoren eingesetzt, d.h. diese Reaktionen finden auf einer Oberfläche statt. Diese ist mit Katalysatoren, beispielsweise katalytisch aktiven Metallen, wie zum Beispiel Platin, Palladium, Rhodium und Ruthenium beschichtet.

Neben der Dehydrierung von organischen Molekülen zu Zwischen-/Endprodukten spielt die Dehydrierung auch in Anwendungen eine Rolle, in denen Wasserstoff als Alternative zu fossilem Treibstoff erprobt wird. Da jedoch die Speicherung und der Transport von verflüssigtem Wasserstoff mit erheblichen Risiken verbunden sind, sind Alternativen zur Wasserstoffspeicherung wünschenswert.

Die Speicherung von Wasserstoff in flüssigen Wasserstoffträgermaterialien ist eine solche Alternative. Hierfür wird eine chemische Substanz benötigt, die einen reversiblen energiereichen und energiearmen Zustand annehmen kann. Dies passiert durch katalytische Hydrierung und Dehydrierung der Substanz. Eine Substanz, die für diese Reaktionen vorteilhaft verwendet werden kann, kann somit als Wasserstoffspeicher dienen (Teichmann, D., Arlt, W., Wasserscheid, P., Freymann, R.: A future energy supply based on Liquid Organic Hydrogen Carriers (LOHC); Energy & Environmental Science, Issue 8, 2011).

Bei dem Stand der Technik bekannten LOHC-Systemen handelt es sich in der Regel um Stoffpaare, bei denen der energiearme Stoff A eine hochsiedende, funktionalisierte, aromatische Verbindung darstellt, die im energetischen Beladungsvorgang hydriert wird. Ein Beispiel betrifft die Verwendung des Stoffpaares N-Ethylcarbazol/Perhydro-N-Ethylcarbazol, bei dem die energetische Beladung typischerweise bei rund 140°C und erhöhten Drücken und die energetische Entladung bei Temperaturen zwischen 230 und 250°C durchgeführt werden kann.

Neben diesem können polycyclische Aromaten wie Benzol, Naphthalin, Pyrene, Phenanthren als LOHC eingesetzt werden. Strukturen wie Flouren, Flourenen die einen Ring aus fünf Kohlenstoffatomen besitzen, begünstigen ebenso eine Wasserstofffreisetzung bei niedrigen Temperaturen.

Heterozyklische Aromate wie Benzol, Toluol, Terphenyl, Benzyltoluol, Dibenzyltoluol, Biphenyl, Naphthalin, Chinolin,2-Methylchinolin, Flouren und Carbazol ermöglichen durch ihre herabgesetzte Bildungsenthalpie eine Wasserstofffreisetzung aus ihren jeweiligen hydrierten Analoga bei niedrigeren Temperaturen. Ebenso besteht die Möglichkeit neben Benzol und Carbazol, Azaborin als LOHC einzusetzen. Azaborin weist bereits bei einer Dehydrierungstemperatur unter 100 °C den maximalen Umsatz auf (Teichmann D., Konzeption und Bewertung einer nachhaltigen Energieversorgung auf Basis flüssiger Wasserstoffträger, Shaker Verlag, Aachen, 2015.)

Der energiereiche Stoff Perhydro-N-Ethylcarbazol besitzt im genannten System eine WasserstoffKapazität von rund 6 Massen-% Wasserstoff. So reicht die im freisetzbaren Wasserstoff gespeicherte Energie von 100 kg Perhydro-N-Ethylcarbazol aus, um ein Kraftfahrzeug etwa 500 km zu bewegen, wobei bei der energetischen Nutzung an Bord fast ausschließlich Wasserdampf als Verbrennungsprodukt gebildet wird. Damit stellt der Ansatz eine technisch interessante Alternative zu anderen Energiespeicherkonzepten für mobile Anwendungen dar.

Eine für diese Anwendung ebenfalls interessante Klasse bilden Wärmeträgeröle wie zum Beispiel Dibenzyltoluol, die bei Temperaturen von 80 bis 260°C und 10 bis 50 bar katalytisch hydriert werden können. Solche Stoffe sind aus Brückner, N., Obesser, K., Bösmann, A., Teichmann, D., Arlt, W., Dungs, J. und Wasserscheid, P. (2014), Evaluation of Industrially Applied Heat -Transfer Fluids as Liquid Organic Hydrogen Carrier Systems. ChemSusChem, 7; 229-235. doi : 10.1002/cssc.201300426 bekannt.

Die Dehydrierung von flüssigen Wasserstoffträgermaterialien erfolgt katalytisch bei Temperaturen von über 260°C. Der dabei freigesetzte Wasserstoff kann zum Beispiel in einer Brennstoffzelle oder in einem Verbrennungsmotor energetisch genutzt werden. Alternativ kann der so gewonnene Wasserstoff auch als Ausgangsstoff in der chemischen Industrie, beispielsweise Ammoniaksynthese, Methanolproduktion, Hydrierung von Speiseölen, Fischer-Tropsch-Synthese etc. eingesetzt werden. Erfolgt die Wasserstofffreisetzung an Bord eines Fahrzeugs, kann der dabei bereit gestellte Wasserstoff direkt zum Betrieb des Fahrzeugs genutzt werden. Ein Problem bei der katalytischen Dehydrierung der flüssigen Wasserstoffträgermaterialien ist eine energieeffiziente und gleichmäßige Beheizung der Katalysatoren, sowie das Inkontaktbringen der Katalysatoren mit den Reaktanden bei einer für die Umsetzung optimalen Temperatur.

Zur Dehydrierung werden üblicherweise Metallkatalysatoren basierend auf Platin, Palladium, Rhodium und Ruthenium eingesetzt wie beispielsweise in der WO 2016/096744 beschrieben.

Für einen umfassenden Einsatz dieser Anwendungen ist jedoch ein einfaches und kostengünstiges Verfahren wünschenswert. Zudem sollte das Verfahren einen hohen Wirkungsgrad aufweisen.

Folglich stellt die vorliegende Erfindung ein Verfahren zur Dehydrierung von organischen Molekülen (OM) zu Verfügung, das Verfahren weist die folgenden Schritte auf
a) Zuführen der organischen Moleküle (OM) in einen Reaktionsbehälter (RB),
   wobei der Reaktionsbehälter
   i) mit einer Vorrichtung zum Erzeugen eines induktiven Feldes (IF) versehen ist; und
   ii) einen Suszeptor (S) für das induktive Feld (IF) aufweist,
b) Anlegen eines induktiven Feldes (IF) und Einwirkung des induktiven Feldes (IF) auf den Suszeptor (S) und die organischen Moleküle (OM),
c) Entnehmen des Wasserstoffes aus dem Reaktionsbehälter (RB) während und/oder nach Schritt b),
d) Entnehmen der dehydrierten organischen Moleküle (DOM) aus dem Reaktionsbehälter (RB) während und/oder nach Schritt b), beispielsweise während Schritt c),

wobei der Suszeptor (S) einen aktiven Suszeptor (AS) enthält, oder daraus besteht,
   - der aktiven Suszeptor (AS) derart beschaffen ist, dass er magnetisch an das induktive Feld (IF) ankoppeln kann und
      und
der Reaktionsbehälter derart beschaffen ist, dass
   - der aktiven Suszeptor (AS) an das induktive Feld (IF) ankoppeln kann,
   - der Suszeptor (S) in Kontakt mit den organischen Molekülen (OM) kommt und
   - der Reaktionsbehälter und dessen Inhalt frei von Platin, Palladium, Rhodium, Gold, Iridium, Titan, Tantal und Ruthenium ist. Das beanspruchte Verfahren ist gemäß Anspruch 1.

Es wurde überraschenderweise gefunden, dass eine erhöhte Wasserstoffentwicklung auftritt solange das induktive Feld angelegt ist und auf die üblicherweise verwendeten katalytisch wirksamen Metalle wie Platin, Palladium, Rhodium, Gold, Iridium, Titan, Tantal und Ruthenium verzichtet werden kann. Zudem kann auf die bei diesen Metallen üblicherweise aufwendige Strukturierung und der Erzeugung einer hohen spezifischen Oberfläche verzichtet werden, lediglich eine geringe Aufrauhung der Oberfläche ist erforderlich. Dadurch werden die Kosten erheblich gesenkt. Zudem konnte der Wirkungsgrad gesteigert werden.

In der vorliegenden Erfindung bedeutet "Katalytisches Material" ein Material welches kein Platin, Palladium, Rhodium, Gold, Iridium, Titan, Tantal und Ruthenium enthält oder daraus besteht.

In der vorliegenden Anmeldung bedeutet "festes loses Material" (FLM), dass das Material nicht mit dem Reaktionsbehälter (RB) verbunden ist, sondern sich frei innerhalb des Reaktionsbehälters (RB) bewegen kann und einen festen Aggregatzustand aufweist.

In der vorliegenden Anmeldung bedeutet Suszeptor (S) eine Vorrichtung welche einen aktiven Suszeptor (AS) enthält, oder daraus besteht. Der aktive Suszeptor (AS) kann an das induktive Feld ankoppeln. Neben dem aktiven Suszeptor (AS) kann der Suszeptor (S) weitere Materialien, beispielsweise Trägermaterialien enthalten.

Das Verfahren der vorliegenden Erfindung kann kontinuierlich oder diskontinuierlich durchgeführt werden. Bei einem kontinuierlichen Verfahren werden organische Moleküle (OM) kontinuierlich dem Reaktionsbehälter (RB) zugeführt, während simultan Wasserstoff freigesetzt und zusammen mit den dehydrierten organischen Molekülen (DOM) dem Reaktionsbehälter (RB) entnommen werden. Bei einem diskontinuierlichen Verfahren werden organische Moleküle (OM) dem Reaktionsbehälter (RB) zugeführt und Wasserstoff freigesetzt während keine weiteren organischen Moleküle (OM) dem Reaktionsbehälter (RB) zugeführt werden. In der Regel ist eine Entnahme des Wasserstoffes während des diskontinuierlichen Verfahrens aufgrund der Druckzunahme im Reaktor notwendig. Dies kann beispielsweise über ein übliches Überdruckventil erfolgen.

Reaktionsbehälter (RB), die induktiv beheizbar sind, sind im Stand der Technik bekannt.

Üblicherweise ist die Vorrichtung zum Erzeugen des induktiven Feldes (IF) auf der Außenseite des Reaktionsbehälters angebracht und der Mantel des Reaktionsbehälters (RB) besteht aus einem Material, welches nicht oder nur geringfügig mit dem induktiven Feld (IF) wechselwirkt. Prinzipiell kann die Vorrichtung zum Erzeugen des induktiven Feldes (IF) auch auf der Innenseite angebracht werden, jedoch ist dies nicht bevorzugt.

Der Suszeptor (S) ist ein festes loses Material (FLM) oder ein ruhender Suszeptor (RS).

Beispiele für ruhende Suszeptoren (RS) sind Lochplatten, beispielsweise aufeinander in Form eines Siebgestelles aufeinander angebrachte Lochplatten; Netze, z.B. Fassernetze; Gitter; Spiralen; Zylinder, honey-comb-Strukturen und Metallwolle.

Der ruhende Suszeptor (RS) enthält ein katalytisches Material (KM) oder besteht daraus, oder der ruhende Suszeptor (RS) ist als Träger für das katalytische Material (KM) ausgeführt.

Falls der ruhende Suszeptor (RS) als Träger für das katalytische Material (KM) ausgeführt ist, so befindet sich das katalytische Material (KM) vorzugsweise als lose Schüttung auf dem Träger. Hierfür sind beispielsweise Lochplatten besonders geeignet.

Der ruhende Suszeptor (RS) enthält ein katalytisches Material (KM) oder besteht daraus bedeutet in der vorliegenden Anmeldung, dass das katalytische Material (KM) derart auf dem ruhende Suszeptor (RS) angebracht ist, dass es sich zumindest teilweise an der Oberfläche befindet. Falls der Ruhende Suszeptor (RS) aus dem katalytischen Material (KM) besteht so wirkt das katalytische Material (KM) gleichzeitig als Suszeptor.

Beispielsweise kann der Ruhende Suszeptor (RS) mit dem katalytischen Material (KM) beschichtet sein oder das katalytische Material (KM) kann in den Ruhenden Suszeptor (RS) eingebettet sein. In letzterem Fall kann es vorkommen, dass sich das katalytische Material (KM) nicht ausschließlich an der Oberfläche befindet auch wenn dies wünschenswert ist. Daher die Formulierung "es sich zumindest teilweise an der Oberfläche befindet".

Geeignete katalytische Materialien (KM) sind beispielsweise Cr, V, Zn, Co, Mo, W, Ni, Al, Cu, Eisen, Fe₂O₃ oder Legierungen von Cu, Zn, Cr, Ni, Mo, oder Eisen, beispielsweise Stähle, wie Edelstahl, Cr-Ni-Stahl, CrNiMo-Stahl ist. Bevorzugte katalytische Materialien (KM) sind beispielsweise Eisen, Fe₂O₃, (CoMoAl)ₓO_{y}, oder Legierungen von Eisen, beispielsweise Stähle, wie Edelstahl, Cr-Ni-Stahl, CrNiMo-Stahl.

Das katalytische Material (KM) und der aktive Suszeptor (AS) können identisch oder verschieden sein. Beispielsweise kann Al, Cu, Zn, Eisen oder Legierungen von Cu, Zn oder Eisen, beispielsweise Stähle, wie Edelstahl, Cr-Ni-Stahl, Cr-Ni-Mo-Stahl gleichzeitig als aktiver Suszeptor (AS) und als katalytisches Material (KM) eingesetzt werden.

"Identisch" bedeutet hier, dass das katalytische Material (KM) als aktiver Suszeptor (AS) fungiert, der Suszeptor (S) aber noch weitere Materialien enthalten kann, die an das induktive Feld (IF) ankoppeln können.

Beispiele für Ruhenden Suszeptor (RS) in die katalytisches Material (KM) eingebettet ist, sind in Matrizen eingeschlossene Metallpartikel, beispielsweise Polymer- oder Keramikmatrizen in die Metallpartikel eingeschlossen sind.

Der Ruhende Suszeptor (RS) kann auch aus porösen metallurgischen Reststoffen, beispielsweise Rotschlamm, der mit Metallpartikel versehen ist aufgebaut sein.

Diese Metallpartikel wirken üblicherweise als katalytisches Material (KM) und aktiver Suszeptor (AS) gleichzeitig.

Der Ruhende Suszeptor (RS) kann alternativ ein Zylinder oder eine honey-comb-Struktur sein, welche mit aktivem Suszeptor (AS), beispielsweise Metallwolle, insbesondere Stahlwolle. In dieser Variante besteht der Zylinder oder die honey-comb-Struktur normalerweise aus Material welches induktiv nicht ankoppelt, beispielsweise Siliciumcarbid.

Der Ruhende Suszeptor (RS) kann alternativ eine Lochplatte oder ein Stapel von Lochplatten sein. Diese Lochplatte(n) können ein katalytisches Material (KM) enthalten oder daraus bestehen. Die Lochplatten können auch als Träger für eine Katalysatorschüttung, insbesondere Fe₂O₃, (CoMoAl)ₓO_{y}, Cr, V, Zn, Co, Mo, W, Ni, fungieren.

Der Ruhende Suszeptor (RS) kann alternativ ein mit katalytischem Material (KM) beschichtetes Netz, z.B. Fasernetz sein. Diese werden üblicherweise mit Fasermatten zu Rollen geformt. Das katalytische Material (KM) wirkt hier üblicherweise gleichzeitig als aktiver Suszeptor (AS).

Die Beschichtung mit katalytischem Material (KM) kann beispielsweise mittels thermischem Spritzen, Dipcoating-Verfahren oder elektrochemischer Beschichtung (Elektroplattierung) erfolgen. Hierdurch kann beispielsweise eine raue und poröse Schicht hergestellt werden.

Vorzugsweise weist das katalytische Material eine geringfügige Rauigkeit von 30 bis 200 µm auf

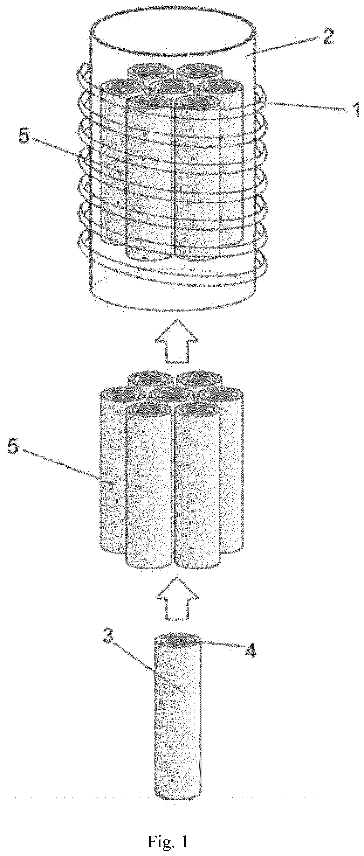

Figur 1 zeigt einen Reaktionsbehälter (2) aus Quarzglas mit einer Induktionsspule (1). Die Siliciumcarbidrohre (3) sind mit Stahlwolle (4) gefüllt und zu einem Rohrbündel (5) zusammengefasst. Die Stahlwolle (4) wirkt als Suszeptor (S) und wird üblicherweise mit katalytischem Material (KM) beschichtet. Am oberen und unteren Ende des Reaktionsbehälters befinden sich Edelstahlflansche (nicht in der Abbildung gezeigt).

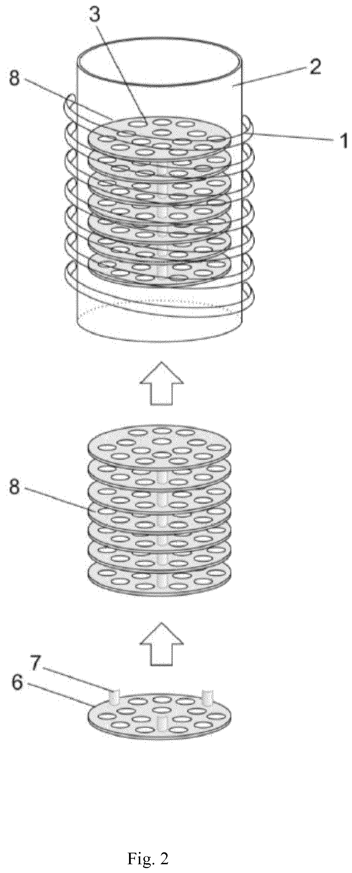

Figur 2 zeigt ebenfalls einen Reaktionsbehälter (2) aus Quarzglas mit einer Induktionsspule (1) wie in Figur 1. Jedoch enthält der Reaktionsbehälter ein Stack von Lochplatten (8) welcher aus Lochplatten (6) und entsprechenden Abstandshaltern (7) aufgebaut ist. Die Lochplatten können mit katalytischem Material (KM) beschichtet sein oder als Träger für eine Schüttung von katalytisch aktivem Material verwendet werden. Am oberen und unteren Ende des Reaktionsbehälters befinden sich Edelstahlflansche (nicht in der Abbildung gezeigt).

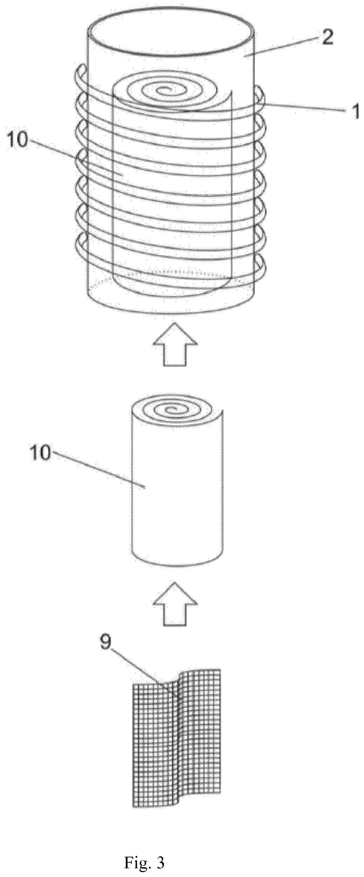

Figur 3 zeigt ebenfalls einen Reaktionsbehälter (2) mit einer Induktionsspule (1) wie in Figur 1 und 2. Ein Fasergitter (9) welches üblicherweise mit katalytischem Material (KM) beschichtet ist und als Suszeptor (S) wirkt wird mittels eines Fasermaterials (10) zu einer Rolle geformt und in den Reaktionsbehälter (2) eingebracht. Am oberen und unteren Ende des Reaktionsbehälters befinden sich Edelstahlflansche (nicht in der Abbildung gezeigt).

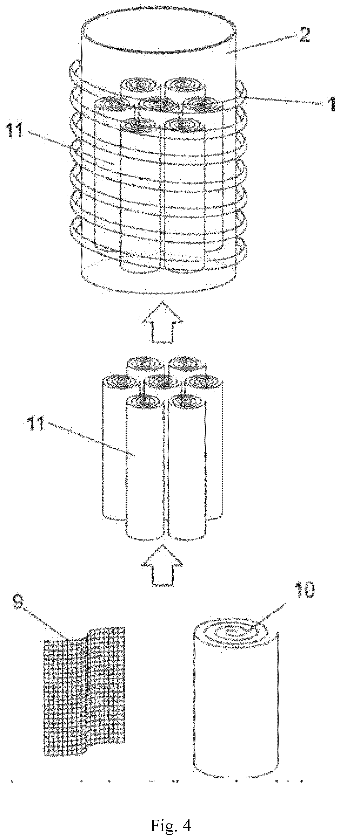

Figur 4 zeigt eine Variante der Ausführungsform von Figur 3 bei der mehrere Rollen (10) und mehrere Fasergitter (9) zu einem Bündel (11) geformt werden und in den Reaktionsbehälter (2) eingebracht. Am oberen und unteren Ende des Reaktionsbehälters befinden sich Edelstahlflansche (nicht in der Abbildung gezeigt).

Im Folgenden sind bevorzugte Ausführungsformen des festen losen Materials (FLM) beschrieben.

Das feste lose Material (FLM) besteht vorzugsweise aus dem katalytischen Material (KM) oder weist eine äußere Schicht (Sch) auf, die ein katalytisches Material (KM) enthält oder daraus besteht. Das katalytische Material (KM) und der aktive Suszeptor (AS) können identisch oder verschieden sein, vorzugsweise sind sie identisch. Wie oben ausgeführt bedeutet "Identisch" hier, dass das katalytische Material (KM) als aktiver Suszeptor (AS) fungiert, der Suszeptor (S) aber noch weitere Materialien enthalten kann, die an das induktive Feld (IF) ankoppeln können.

Die Elemente des festen losen Materials (FLM) weisen vorzugsweise jeweils ein Volumen von 0,040 cm³ bis 120 cm³ auf, bevorzugt sind 0,040 cm³ bis 33,50 cm³, stärker bevorzugt sind 0,040 cm³ bis 16,75 cm³. Beispielsweise ist das feste lose Material walzenförmig, hantelförmig, eiförmig oder kugelförmig.

In einer besonderen Ausführungsform ist das feste lose Material (FLM) kugelförmig, die Elemente des festen losen Materials (FLM) vorzugsweise aufweisend einen Durchmesser von 0,25 cm bis 6,0 cm, bevorzugt sind 0,25 cm bis 5,0 cm.

Vorzugsweise weisen die Elemente des festen losen Materials (FLM) eine äußere Schicht (AS) auf, welche äußere Schicht (AS) ein katalytisches Material (KM) enthält oder daraus besteht und die Elemente des festen losen Materials (FLM) weisen einen inneren Kern (IK) auf, der zumindest ein Phasenwechselmaterial (PCM) enthält oder daraus besteht.

In einer Variante der vorliegenden Erfindung enthält das feste lose Material (FLM) kein Phasenwechselmaterial, vorzugsweise besteht feste lose Material (FLM) aus dem katalytischen Material (KM). In dieser Variante weisen die Elemente des festen losen Materials (FLM) vorzugsweise jeweils ein Volumen von 0,040 cm³ bis 16,75 cm³ auf, stärker bevorzugt ist ein Volumen von 0,040 cm³ bis 10,00 cm³. In einer besonders bevorzugten Variante dieser Variante ist das feste lose Material (FLM) kugelförmig, die Elemente des festen losen Materials (FLM) vorzugsweise aufweisend einen Durchmesser von 0,25 cm bis 2,0 cm, bevorzugt sind 0,25 cm bis 1,0 cm.

In einer alternativen Variante der vorliegenden Erfindung enthält das feste lose Material (FLM) Phasenwechselmaterial. In dieser Variante weisen die Elemente des festen losen Materials (FLM) vorzugsweise jeweils ein Volumen von 0,040 cm³ bis 120 cm³ auf, bevorzugt sind 4,0 cm³ bis 60 cm³, stärker bevorzugt sind 10,00 cm³ bis 33,50 cm³. In einer besonders bevorzugten Variante dieser Variante ist das feste lose Material (FLM) kugelförmig, die Elemente des festen losen Materials (FLM) vorzugsweise aufweisend einen Durchmesser von 1,0 cm bis 6,0 cm, bevorzugt sind 1,5 cm bis 4,5 cm.

Vorzugsweise weist der innere Kern eine elektrisch leitfähige innere Struktur auf. Dies erlaubt eine unmittelbare Beheizung des Phasenwechselmaterials durch das induktive Feld. Diese elektrisch leitfähige innere Struktur kann zumindest einen Schwamm und/oder ein Gitter und/oder Partikel enthalten oder daraus bestehen, welche jeweils aus einem Metall oder einer Legierung gefertigt sind.

In Abhängigkeit des Anwendungsfalles sollte das im inneren Kern enthaltene Phasenwechselmaterial (PCM) vorzugsweise eine Phasenwechseltemperatur von nicht mehr als etwa 450°C aufweisen, stärker bevorzugt nicht mehr als etwa 400°C, noch stärker bevorzugt nicht mehr als etwa 375°C und am meisten bevorzugt nicht mehr als etwa 350°C.

Das Phasenwechselmaterial (PCM) weist vorzugsweise eine Phasenwechseltemperatur von mindestens etwa 200°C auf, stärker bevorzugt sind mindestens etwa 250°C.

Insbesondere bevorzugt sind Phasenwechselmaterialien welche eine Phasenwechseltemperatur zwischen etwa 200°C und etwa 375°C aufweisen, stärker bevorzugt zwischen etwa 250°C und etwa 350°C aufweisen.

Mit einem Phasenwechselmaterial, das eine solche Phasenwechseltemperatur besitzt, kann eine Wärmefreisetzung gewährleistet werden, die für eine optimale Reaktionstemperatur an der Oberfläche sorgt. Auf diese Weise findet eine Wärmefreisetzung nur an der Oberfläche des festen losen Materials (FLM) statt, wodurch an dieser Oberfläche eine optimale Umgebung für den Ablauf der katalysierten Reaktion gewährleistet wird. Weiterhin unterbleibt eine überflüssige Erwärmung des flüssigen Reaktanden, der sich nicht in der Nähe der Katalysatorträger befindet.

Das Phasenwechselmaterial kann selbstverständlich je nach optimaler Reaktionstemperatur und verwendetem Katalysator im Hinblick auf eine dazu passende Phasenwechseltemperatur ausgewählt werden. Hier eignen sich Phasenwechselmaterialien mit Schmelztemperaturen Tₘ und Erstarrungstemperaturen T_{f} im benötigten Temperaturbereich am besten.

In einer Variante der vorliegenden Erfindung ist das Phasenwechselmaterial ein anorganisches Salz oder eine Kombination mehrerer anorganischer Salze. Mögliche Salze oder Kombinationen von Salzen für die Anwendung als Phasenwechselmaterial im Sinne der vorliegenden Erfindung sind LiNC (Tₘ = 254°C), NaNO₂ (Tₘ = 282°C), NaNO₃ + NaCl (Tₘ = 282°C), KNO₃ + NaNO₃ (Tₘ = 290°C), NaNO₃ (Tₘ = 310°C), NaOH (Tₘ = 318°C), KNO₃ (Tm = 337°C), MgCl₂ + NaCl + KCl (Tm = 385°C), NaOH+NaNO₃ (Tₘ = 257°C), NaNO₃+NaOH (Tₘ = 270°C), Li₂CO₃+K₂CO₃+ Na₂CO₃ (Tₘ = 397°C), NaNO₃+NaCl+Na₂SO₄ (Tₘ = 287°C), LiCl+Ca(NO₃)₂ (Tₘ = 270°C), Li₂CO₃+K₂CO₃+Na₂CO₃ (Tₘ = 397°C), LiCl+KCl (Tₘ = 348°C), RbNO₃ (Tₘ = 310°C), ZnCl₂ (Tₘ = 290°C), KClO₄ (Tₘ = 304°C), KOH (Tₘ = 360°C), LiOH+LiCl+KCl (Tₘ = 282°C), NaOH+NaCl+Na₂CO₃ (Tₘ = 318°C), LiOH+LiCl (Tₘ = 264°C), NaNO₂+NaOH (Tₘ = 237°C), KCl+MnCl₂+NaCl (Tₘ = 400°C), NaF+NaNO₃+NaCl (Tₘ = 288°C),

In einer anderen Variante werden metallische Phasenwechselmaterialien verwendet, wobei sich eutektische Systeme mit Schmelztemperaturen Tₘ und Erstarrungstemperaturen T_{f} im benötigten Temperaturbereich am besten eignen. Mögliche Systeme sind Cadmium (Tₘ=321°C), Blei (Tₘ=328°C), Mg-Zn (Tₘ=340°C), Zn-Al (Tₘ=380°C), Mg-Ca-Zn (Tₘ=400°C).

Hohlkugeln üblicherweise enthaltend, oder bestehend aus, dem katalytischen Material (KM) geeignet zum Befüllen mit Phasenwechselmaterial können über Blechumformung (Pressen, Schmieden, usw.) oder durch Beschichten von Styroporkugeln mit Pulver-Slurry und nachfolgendem Ausbrennen und Sintern hergestellt werden können. Die Phasenwechselmaterialien können bei der Herstellung des Katalysatorträgers als schmelzflüssige Legierung, Pulver oder Granulate in aufgeborte Kugeln gefüllt werden. Nach der Befüllung können die Kugeln in einem automatisierbaren Prozess verschweißt werden.

Alternativ können Kugeln aus dem Phasenwechselmaterial geformt werden, die mittels thermischen Spritzens mit dem katalytischen Material (KM) in Dicken von 50 µm bis 5 mm umhüllt werden. Die Herstellung der Phasenwechselmaterial-Kugeln kann auf verschiedenen Wegen erfolgen, beispielsweise durch Gießen in Formen, Pressen von Formteilen (Vorstufen in Form von Draht-, Stababschnitten) oder Schmieden von Formteilen.

Im Folgenden sind bevorzugte Varianten aller Ausführungsformen der Erfindung beschrieben, es sei denn, es wird explizit anderweitig hingewiesen.

Der Suszeptor (S), insbesondere falls der Suszeptor (S) ein ruhender Suszeptor (RS) ist, der ein katalytisches Material (KM) enthält oder daraus besteht und/oder der Suszeptor (S) ein festes loses Material (FLM) ist, welches aus dem katalytischen Material (KM) besteht oder eine äußere Schicht (AS) aufweist die ein katalytisches Material (KM) enthält oder daraus besteht, dadurch gekennzeichnet, dass der Suszeptor (S), weist vorzugsweise eine Rauigkeit von 30 bis 200 µm auf.

Wie oben ausgeführt eignet sich das erfindungsgemäße Verfahren insbesondere zur Dehydrierung von Liquid Organic Hydrogen Carriers (LOHCs).

Vorzugsweise ist das Verfahren der vorliegenden Erfindung folglich ein Verfahren zur Dehydrierung von Liquid Organic Hydrogen Carriers (LOHCs). In diesem Verfahren sind die organischen Moleküle (OM) folglich LOHCs.

Die dehydrierten organischen Molekülen (DOM) sind das Reaktionsprodukt der organischen Moleküle (OM) nach deren Dehydrierung durch das Verfahren der vorliegenden Erfindung.

Das induktive Feld (IF) weist vorzugsweise eine Frequenz von 50 bis 600 kHz, stärker bevorzugt ist eine Frequenz von 75 bis 550 kHz, noch stärker bevorzugt ist eine Frequenz von 100 bis 450 kHz und am stärksten bevorzugt ist eine Frequenz von 150 bis 300 kHz.

Das induktive Feld (IF) weist vorzugsweise eine Stromstärke von 4,0 bis 20 Ampere auf, stärker bevorzugt sind 6,0 bis 16 Ampere.

Vorzugsweise wird das Verfahren kontinuierlich durchgeführt und die mittlere Verweildauer der organischen Moleküle (OM) in Schritt b) beträgt 1,0 bis 16 min/g LOHC. Hierbei wird das Gewicht der LOHCs ohne eventuell vorhandene Lösemittel zugrunde gelegt.

Üblicherweise sind die organischen Moleküle (OM) flüssig und/oder in einem Lösemittel gelöst. Geeignete, Lösungsmittel sind im Stand der Technik bekannt, beispielsweise Kohlenwasserstoffe

Üblicherweise beträgt die Temperatur der organischen Moleküle (OM) innerhalb des Reaktionsbehälters in Schritt b) nicht mehr als 400°C, bevorzugt beträgt die Temperatur der organischen Moleküle (OM) innerhalb des Reaktionsbehälters während und zwischen der Schritte a) bis d) nicht mehr als 400°C.

In einer Variante A ist die Erfindung ferner gerichtet auf einen Reaktionsbehälter (RB) welcher
i) mit einer Vorrichtung zum Erzeugen eines induktiven Feldes (IF) versehen ist; und
ii) ein festes loses Material (FLM) enthält,

wobei das feste lose Material (FLM)
   - derart beschaffen ist, dass es magnetisch an das induktive Feld (IF) ankoppeln kann und
   - aus einem Metall (M) oder einer Metalllegierung (ML) besteht welches magnetisch an das induktive Feld (IF) ankoppeln kann oder eine äußere Schicht (Sch) aufweist, welche ein Metall (M) oder einer Metalllegierung (ML) enthält, oder daraus besteht
      und
   - der Reaktionsbehälter derart beschaffen ist, dass das feste lose Material (FLM) an das induktive Feld (IF) ankoppeln kann und
   - der Reaktionsbehälter einen Einlass zur Zuführung von organischen Molekülen (OM) aufweist
und der Reaktionsbehälter derart ausgestaltet ist, dass das feste lose Material (FLM) in Kontakt mit den organischen Molekülen (OM) nach deren Zuführung kommt. Der Reaktionsbehälter ist gemäß Anspruch 9.

In der Variante A ist die Erfindung ferner gerichtet auf ein Verfahren (nicht beansprucht) zur Dehydrierung von organischen Molekülen (OM) aufweisend die folgenden Schritte
a) Zuführen der organischen Moleküle (OM) in einen Reaktionsbehälter (RB),
   wobei der Reaktionsbehälter
   i) mit einer Vorrichtung zum Erzeugen eines induktiven Feldes (IF) versehen ist; und
   ii) ein festes loses Material (FLM) enthält,
b) Anlegen eines induktiven Feldes (IF) und Einwirkung des induktiven Feldes (IF) auf das feste lose Material (FLM) und die organischen Moleküle (OM),
c) Entnehmen des Wasserstoffes aus dem Reaktionsbehälter (RB) während und/oder nach Schritt b),
d) Entnehmen der dehydrierten organischen Moleküle (DOM) aus dem Reaktionsbehälter (RB) während und/oder nach Schritt b), beispielsweise während Schritt c),

wobei das feste lose Material (FLM)
   - derart beschaffen ist, dass es magnetisch an das induktive Feld (IF) ankoppeln kann und
   - aus einem Metall (M) oder einer Metalllegierung (ML) besteht welches magnetisch an das induktive Feld (IF) ankoppeln kann oder eine äußere Schicht (Sch) aufweist, welche ein Metall (M) oder einer Metalllegierung (ML) enthält, oder daraus besteht
      und
der Reaktionsbehälter derart beschaffen ist, dass das feste lose Material (FLM) an das induktive Feld (IF) ankoppeln kann und das feste lose Material (FLM) in Kontakt mit den organischen Molekülen (OM) kommt.

Das Metall (M) oder die Metalllegierung (ML) in der Variante A kann beispielsweise Cu, Fe, Pd, Co, Mo, Al, Cr, Zn, Pt oder Legierungen hiervon, beispielsweise Stähle, wie Edelstahl, Cr-Ni-Stahl, Cr-Ni-Mo-Stahl.

Das feste lose Material (FLM) weist vorzugsweise eine äußere Schicht (Sch) auf, welche aus einem Metall (M) oder einer Metalllegierung (ML) besteht.

In einer bevorzugten Variante ist das feste lose Material (FLM) jedoch frei von Platin, Palladium, Rhodium, Gold, Iridium, Titan, Tantal und Ruthenium, stärker bevorzugt ist der Reaktionsbehälter und dessen Inhalt frei von Platin, Palladium, Rhodium, Gold, Iridium, Titan, Tantal und Ruthenium

Bevorzugte Merkmale des Verfahrens gemäß der vorliegenden Erfindung sind auch bevorzugt Merkmale des Reaktionsbehälters und des Verfahrens der Variante A gemäß der vorliegenden Erfindung.

Die Erfindung ist ferner gerichtet auf die Verwendung von festem losen Material (FLM) welches
- derart beschaffen ist, dass es magnetisch an ein induktives Feld (IF) ankoppeln kann und
- aus einem Metall (M) oder einer Metalllegierung (ML) besteht welches magnetisch an das induktive Feld (IF) ankoppeln kann oder eine äußere Schicht (Sch) aufweist, welche ein Metall (M) oder einer Metalllegierung (ML) enthält, oder daraus besteht
- die Elemente des festen losen Materials (FLM) jeweils ein Volumen von 0,040 cm³ bis 16,75 cm³aufweisen;
zur Dehydrierung von organischen Molekülen (OM). Die Verwendung ist gemäß Anspruch 10.

Das Metall (M) oder die Metalllegierung (ML) in der Variante A kann beispielsweise Cu, Fe, Pd, Co, Mo, Al, Cr, Zn, Pt oder Legierungen hiervon, beispielsweise Stähle, wie Edelstahl, Cr-Ni-Stahl, Cr-Ni-Mo-Stahl

Das feste lose Material (FLM) weist vorzugsweise eine äußere Schicht (Sch) auf, welche aus einem Metall (M) oder einer Metalllegierung (ML) besteht.

In einer bevorzugten Variante ist das feste lose Material (FLM) jedoch frei von Platin, Palladium, Rhodium, Gold, Iridium, Titan, Tantal und Ruthenium.

Bevorzugte Merkmale des Verfahrens gemäß der Vorliegenden Erfindung, des Reaktionsbehälters und des Verfahrens der Variante A gemäß der vorliegenden Erfindung sind auch bevorzugte Merkmal der Verwendung der vorliegenden Erfindung.

### Experimenteller Teil

### Messmethoden:

Die Rauigkeit wurde gemäß DIN EN ISO 4287 ermittelt.

Hierzu wurde das Rauheitsmesssystem von Hommelwerke eingesetzt, welches die maximale Rauheitsprofilhöhe wiedergegeben hat.

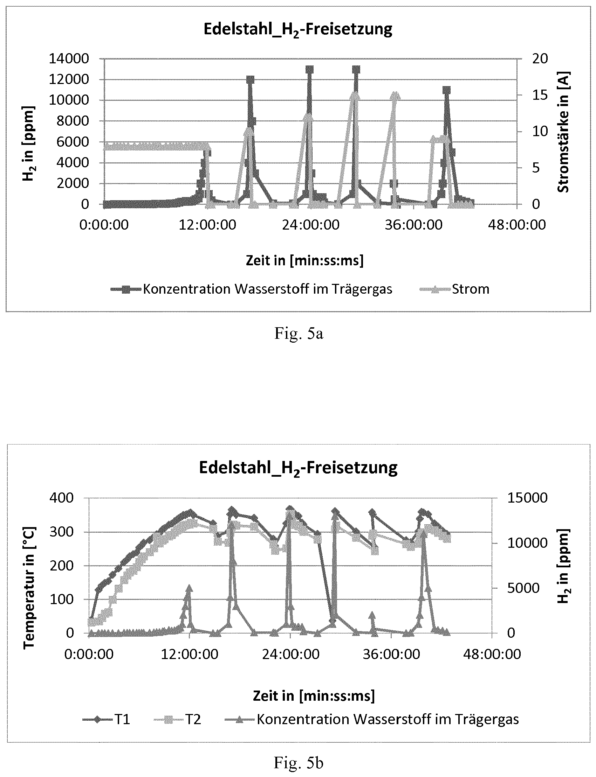

Temperatur der organischen Moleküle (OM) innerhalb des Reaktionsbehälters wurde mittels Thermoelementen bestimmt, die derart im Reaktor positioniert wurden, dass sie die Temperatur an der direkten Kugeloberfläche sowie in der Flüssigkeit ermittelten. Hierbei war das Thermoelement der Flüssigkeit 0,5 bis 1,5 mm von der Kugeloberfläche entfernt. Die Temperaturentwicklung der Thermoelemente werden in den Abbildungen 5 bis 8 mit T1 und T2 bezeichnet. T1 wurde direkt an der Oberfläche des Suszeptor (S) gemessen, T2 in der Flüssigkeit. Die Temperatur T1 wird als Temperatur der organischen Moleküle (OM) angesehen.

### Wasserstoffmenge

Die freigesetzte Wasserstoffmenge wurde mit Hilfe eines Gaslecksuchgerätes, Testo 316-EX bestimmt. Das Messgerät wurde auf das chemische Element Wasserstoff kalibriert und gibt dessen Anteil in ppm bzw. Vol% wieder. Die Gaskonzentrationen werden vom Halbleitersensor im ppm-Bereich gemessen und mit einer Auflösung von 1 ppm im Display angezeigt. Hierbei wurde der freigesetzte Wasserstoffgehalt in einem N-Strom gemessen. Das Wasserstoff-Stickstoff-Gemisch wurde über ein Rohr, in welchem sich der Sensor des Messgerätes befand, geleitet. Anschließend konnte mit Hilfe des Messgerätes der Anteil an freigesetzten Wasserstoff in ppm in Abhängigkeit des anwesenden Stickstoffes ermittelt werden. Durch das vorherige Ermitteln einer Korrekturkurve mittels eines Wasserstoffdurchflussmessers konnte eine Messgenauigkeit von R²=0,9 festgestellt werden.

### Beispiel 1:

Edelstahlkugeln mit NaOH als PCM-Material aufweisend einen ungefähren Durchmesser von 4 cm wurden wie folgt hergestellt. Es wurden jeweils zwei hohle Halbkugeln mittels einer Schweißnaht zusammengefügt. Um das PCM in die Hohlkugel einzubringen wurde eine Bohrung von 5 bis 10 mm angebracht. Über das Loch wurde das PCM, in einer Menge von 25-30 g, in Pulverform eingebracht. Anschließend wurden die Kugeln mittels Schweißnaht wieder verschlossen. Nach der Kugelherstellung erfolgte die Aufbereitung bzw. Strukturierung der Kugeloberfläche mittels Sandstrahlverfahren. In der Abbildung 1 ist der Kugelaufbau ersichtlich. Mit Hilfe des Sandstrahlverfahrens konnte auf der Oberfläche der Kugel eine F12-Strukturierung, die eine maximale Rauigkeit von 100,5 µm erzeugte, durchgeführt werden.

Die Kugeln wurden in einen selbstkonstruierten Reaktionsbehälter eingebracht. Der Reaktor besteht aus an einem Edelstahlglattflansch angebrachtem Quarzglasrohr. Der Reaktor weißt ein Volumen von 455 cm³ auf. Der Blindflansch besitzt vier Bohrungen, wobei zwei Bohrungen mit Thermoelementen versehen sind, eine Bohrung für die Zuführung von Material bzw. zur Stickstoffspülung und eine Bohrung für den Wasserstoffauslass.

Dem Reaktor wurde LOHC-Material (Dibenzyltoluol) über einen Rohrzulauf zugeführt.

Der entstandene Wasserstoff wurde entnommen und mit einem konstanten Stickstoffstrom von 0,8l/h als Trägergas der Wasserstoffbestimmung zugeführt. Der Wasserstoffbestimmung wurde eine Kondensatfalle vorgeschaltet um potentiell verdampftes LOHC abzufangen.

Ein Hochfrequenz-Magnetfeld bis zum Erreichen der jeweiligen Maximaltemperatur von ca. 350 °C ein- und bei Erreichen abgeschaltet. Die induzierte Spannung beträgt 400 V. Die Frequenz variierte hierbei zwischen 150 und 300 kHz. Die Stromverläufe in Fig. 5a zeigen die An-und Abschaltphasen. Die H₂-Konzentration als Maß für die Freisetzung ging nach dem Abschalten sofort stark zurück wie aus Figur 5a ersichtlich, wohingegen der Temperaturabfall deutlich langsamer erfolgte wie aus Figur 5b ersichtlich. Dadurch ist der alleinige Einfluss der Temperatur auf die H₂-Freisetzung ausgeschlossen. Das Magnetfeld führt folglich zu einer Aktivierung des Katalysator-Materials.

### Beispiel 2:

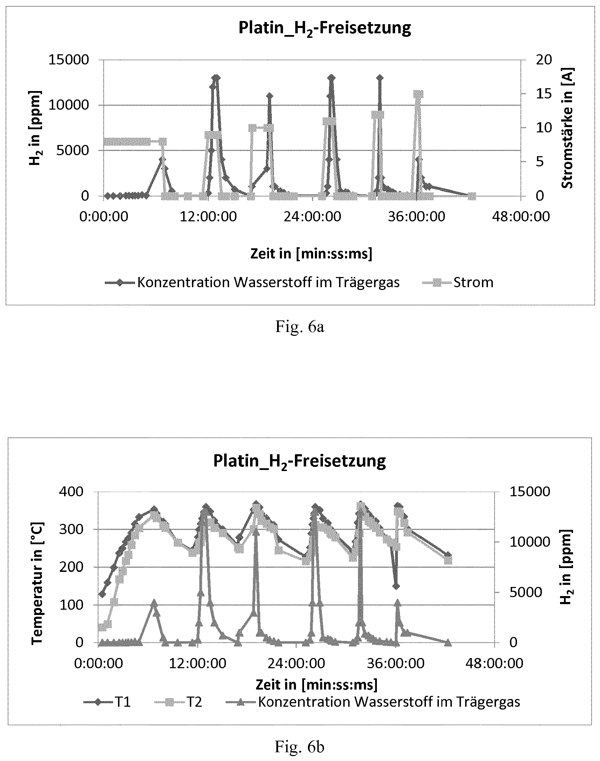

Die in Beispiel 1 erhaltenen Edelstahlkugeln wurden elektrochemisch mit einer Platinschicht von ca. 1 bis 5 µm versehen und die Wasserstofffreisetzung wie in Beispiel 1 bestimmt. Die jeweiligen Verläufe sind in Figuren 6a und 6b gezeigt.

### Beispiel 3:

Kupferhohlkugeln aufweisend einen ungefähren Durchmesser von 4 cm wurden wie folgt hergestellt. Hierbei wurden zwei getrennte Hohlkugeln mittels einer Schweißnaht verscheißt und anschließend durch Sandstrahlen aufgeraut.

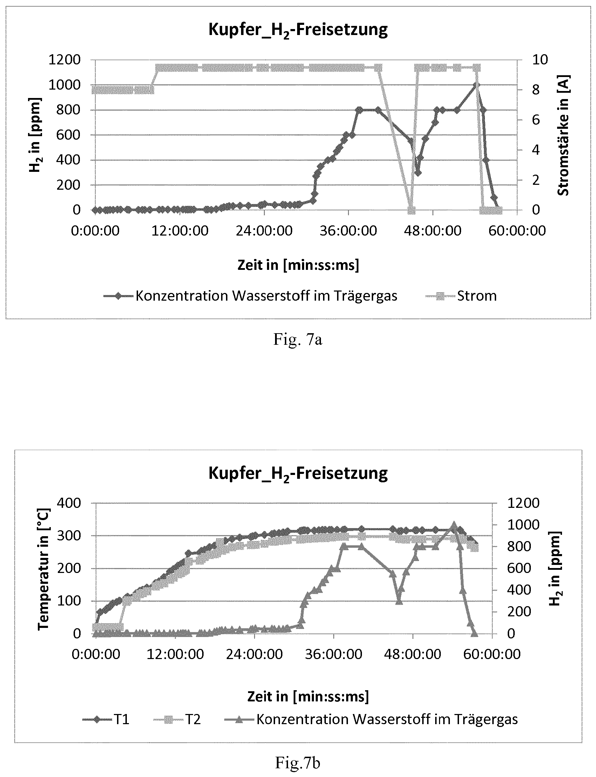

Die Kugeln wiesen eine Rauigkeit von 100 µm auf. Die Wasserstofffreisetzung wurde wie in Beispiel 1 bestimmt. Die jeweiligen Verläufe sind in Figuren 7a und 7b gezeigt.

Erwartungsgemäß zeigen die Kupferkugeln aufgrund ihrer schlechteren Ankoppelung an das Induktive Feld eine geringere H₂-Entwicklung.

### Beispiel 4

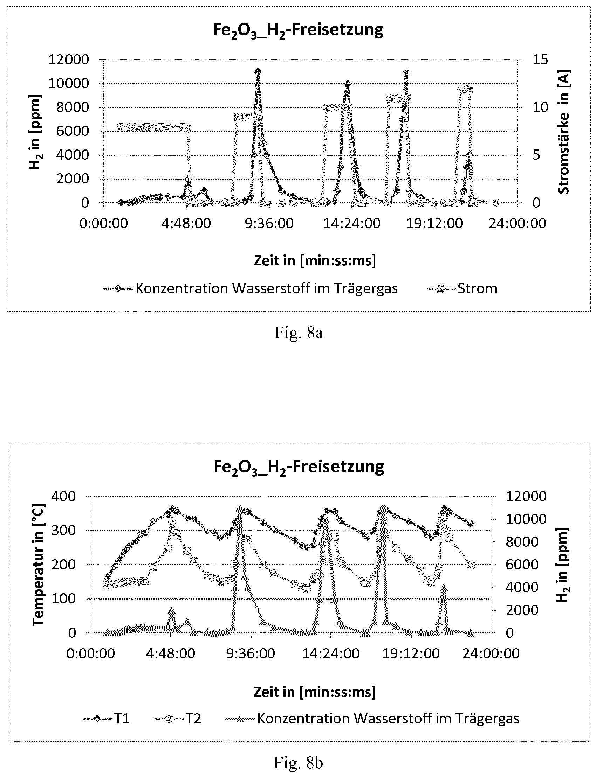

Der Reaktionsbehälter wurde mit einem Edelstahlsieb als Suszeptor ausgerüstet Fe₂O₃-Pellets aufweisend ein Volumen von 0,65 cm³ bis 5,25 cm³ wurden als Schüttung auf dem Edelstahlsieb aufgebracht. Die Wasserstofffreisetzung wurde wie in Beispiel 1 bestimmt. Die jeweiligen Verläufe sind in Figuren 8a und 8b gezeigt.

## Patentansprüche

1. Ein Verfahren zur Dehydrierung von organischen Molekülen (OM) aufweisend die folgenden Schritte
a) Zuführen der organischen Moleküle (OM) in einen Reaktionsbehälter (RB), wobei der Reaktionsbehälter
i) mit einer Vorrichtung zum Erzeugen eines induktiven Feldes (IF) versehen ist; und
ii) einen Suszeptor (S) für das induktive Feld (IF) aufweist,
b) Anlegen eines induktiven Feldes (IF) und Einwirkung des induktiven Feldes (IF) auf den Suszeptor (S) und die organischen Moleküle (OM),
c) Entnehmen des Wasserstoffes aus dem Reaktionsbehälter (RB) während und/oder nach Schritt b),
d) Entnehmen der dehydrierten organischen Moleküle (DOM) aus dem Reaktionsbehälter (RB) während und/oder nach Schritt b), beispielsweise während Schritt c),
wobei der Suszeptor (S) einen aktiven Suszeptor (AS) enthält, oder daraus besteht,
- der aktive Suszeptor (AS) derart beschaffen ist, dass er magnetisch an das induktive Feld (IF) ankoppeln kann und
der Reaktionsbehälter derart beschaffen ist, dass
- der aktiven Suszeptor (AS) an das induktive Feld (IF) ankoppeln kann,
- der Suszeptor (S) in Kontakt mit den organischen Molekülen (OM) kommt und
- der Reaktionsbehälter und dessen Inhalt frei von Platin, Palladium, Rhodium, Gold, Iridium, Titan, Tantal und Ruthenium ist,
wobei der Suszeptor (S) ein festes loses Material (FLM) oder ein ruhender Suszeptor (RS) ist,
wobei der ruhende Suszeptor (RS) ein katalytisches Material (KM) enthält oder daraus besteht, oder der ruhende Suszeptor (RS) als Träger für das katalytische Material (KM) ausgeführt ist, wobei das katalytische Material (KM) kein Platin, Palladium, Rhodium, Gold, Iridium, Titan, Tantal und Ruthenium enthält,
wobei das feste lose Material (FLM) aus dem katalytischen Material (KM) besteht oder eine äußere Schicht (Sch) aufweist die ein katalytisches Material (KM) enthält oder daraus besteht, wobei das katalytische Material (KM) Cr, V, Zn, Co, Mo, W, Ni, Al, Cu, Eisen, Fe₂O₃, (CoMoAl)ₓO_{y}, oder Legierungen von Cu, Zn, Cr, Ni, Mo, oder Eisen, beispielsweise Stähle (Cr-Ni-Stahl, CrNiMo-Stahl), ist.

2. Das Verfahren gemäß Anspruch 1, wobei die Elemente des festen losen Materials (FLM) jeweils ein Volumen von 0,040 cm³ bis 16,75cm³ aufweisen.

3. Das Verfahren gemäß Anspruch 1 oder 2, wobei die Elemente des festen losen Materials (FLM) eine äußere Schicht (Sch) aufweisen, welche eine äußere Schicht (Sch) aufweisen die ein Katalytisches Material (KM) enthält oder daraus besteht und einen inneren Kern (IK) aufweisen, der zumindest ein Phasenwechselmaterial (PCM) enthält oder daraus besteht.

4. Das Verfahren gemäß einem der vorangegangenen Ansprüche 1 bis 3, wobei der Suszeptor (S) ein ruhender Suszeptor (RS) ist, der ein katalytisches Material (KM) enthält oder daraus besteht und/oder der Suszeptor (S) ein festes loses Material (FLM) ist, welches aus dem katalytischen Material (KM) besteht oder eine äußere Schicht (AS) aufweist die ein katalytisches Material (KM) enthält oder daraus besteht, **dadurch gekennzeichnet, dass** der Suszeptor (S) eine Rauigkeit von 30 bis 200 µm aufweist.

5. Das Verfahren gemäß einem der vorangegangenen Ansprüche, wobei das induktive Feld (IF) eine Frequenz von 50 bis 600 kHz und/oder eine Stromstärke von 4,0 bis 20 Ampere aufweist.

6. Das Verfahren gemäß einem der vorangegangenen Ansprüche, wobei das Verfahren kontinuierlich durchgeführt wird und die mittlere Verweildauer der organischen Moleküle (OM) in Schritt b) beträgt 1,0 bis 16 min/g LOHC.

7. Das Verfahren gemäß einem der vorangegangenen Ansprüche, wobei die organischen Moleküle (OM) flüssig sind und/oder in einem Lösemittel gelöst sind.

8. Das Verfahren gemäß einem der vorangegangenen Ansprüche, wobei die Maximaltemperatur der organischen Moleküle (OM) innerhalb des Reaktionsbehälters (RB) nicht höher als 400°C ist.

9. Reaktionsbehälter (RB) welcher
i) mit einer Vorrichtung zum Erzeugen eines induktiven Feldes (IF) versehen ist; und
ii) ein festes loses Material (FLM) enthält,
wobei das feste lose Material (FLM)
- derart beschaffen ist, dass es magnetisch an das induktive Feld (IF) ankoppeln kann und
- aus einem Metall (M) oder einer Metalllegierung (ML) besteht welches magnetisch an das induktive Feld (IF) ankoppeln kann oder eine äußere Schicht (Sch) aufweist, welche ein Metall (M) oder einer Metalllegierung (ML) enthält, oder daraus besteht
und
- der Reaktionsbehälter derart beschaffen ist, dass das feste lose Material (FLM) an das induktive Feld (IF) ankoppeln kann und
- der Reaktionsbehälter einen Einlass zur Zuführung von organischen Molekülen (OM) aufweist,
der Reaktionsbehälter derart ausgestaltet ist, dass das feste lose Material (FLM) in Kontakt mit den organischen Molekülen (OM) nach deren Zuführung kommt, der Reaktionsbehälter und dessen Inhalt frei von Platin, Palladium, Rhodium, Gold, Iridium, Titan, Tantal und Ruthenium ist, und
wobei das feste lose Material (FLM) aus dem katalytischen Material (KM) besteht oder die äußere Schicht (Sch) ein katalytisches Material (KM) enthält oder daraus besteht, wobei daskatalytische Material (KM) Cr, V, Zn, Co, Mo, W, Ni, Al, Cu Eisen, Fe₂O₃, (CoMoAl)ₓO_{y}, oder Legierungen von Cu, Zn, Cr, Ni, Mo, oder Eisen, beispielsweise Stähle (Cr-Ni-Stahl, CrNiMo-Stahl), ist.

10. Verwendung von festem losen Material (FLM) welches
- derart beschaffen ist, dass es magnetisch an ein induktives Feld (IF) ankoppeln kann und
- aus einem Metall (M) oder einer Metalllegierung (ML) besteht welches magnetisch an das induktive Feld (IF) ankoppeln kann oder eine äußere Schicht (Sch) aufweist, welche ein Metall (M) oder einer Metalllegierung (ML) enthält, oder daraus besteht
- die Elemente des festen losen Materials (FLM) jeweils ein Volumen von 0,040 cm³ bis 16,75cm³ aufweisen;
zur Dehydrierung von organischen Molekülen (OM),
wobei das feste lose Material (FLM) aus dem katalytischen Material (KM) besteht oder die äußere Schicht (Sch) ein katalytisches Material (KM) enthält oder daraus besteht, wobei das katalytische Material (KM) Cr, V, Zn, Co, Mo, W, Ni, Al, Cu Eisen, Fe₂O₃, (CoMoAl)xOy, oder Legierungen von Cu, Zn, Cr, Ni, Mo, oder Eisen, beispielsweise Stähle (Cr-Ni-Stahl, CrNiMo-Stahl), ist.

## Claims

1. A process for dehydrogenating organic molecules (OM), having the following steps:
a) feeding the organic molecules (OM) into a reaction vessel (RB),
wherein the reaction vessel
i) has been provided with a device for generating an inductive field (IF); and
ii) has a susceptor (S) for the inductive field (IF),
b) applying an inductive field (IF) and allowing the inductive field (IF) to act on the susceptor (S) and the organic molecules (OM),
c) removing the hydrogen from the reaction vessel (RB) during and/or after step b),
d) removing the dehydrogenated organic molecules (DOM) from the reaction vessel (RB) during and/or after step b), for example during step c),
wherein the susceptor (S) comprises or consists of an active susceptor (AS),
- the active susceptor (AS) is such that it can couple magnetically to the inductive field (IF) and
the reaction vessel is such that
- the active susceptor (AS) can couple to the inductive field (IF),
- the susceptor (S) comes into contact with the organic molecules (OM) and
- the reaction vessel and its contents are free of platinum, palladium, rhodium, gold, iridium, titanium, tantalum and ruthenium,
wherein the susceptor (S) is a solid loose material (FLM) or a fixed susceptor (RS),
wherein the fixed susceptor (RS) comprises or consists of a catalytic material (KM), or the fixed susceptor (RS) takes the form of a carrier for the catalytic material (KM), wherein the catalytic material (KM) does not contain any platinum, palladium, rhodium, gold, iridium, titanium, tantalum and ruthenium,
wherein the solid loose material (FLM) consists of the catalytic material (KM) or has an outer layer (Sch) comprising or consisting of a catalytic material (KM), wherein the catalytic material (KM) is Cr, V, Zn, Co, Mo, W, Ni, Al, Cu, iron, Fe₂O₃, (CoMoAl)ₓO_{y}, or alloys of Cu, Zn, Cr, Ni, Mo, or iron, for example steels (Cr-Ni steel, CrNiMo steel).

2. The process according to Claim 1, wherein the elements of the solid loose material (FLM) each have a volume of 0.040 cm³ to 16.75 cm³.

3. The process according to Claim 1 or 2, wherein the elements of the solid loose material (FLM) have an outer layer (Sch) having an outer layer (Sch) comprising or consisting of a catalytic material (KM) and having an inner core (IK) comprising or consisting of at least one phase change material (PCM).

4. The process according to any of the preceding Claims 1 to 3, wherein the susceptor (S) is a fixed susceptor (RS) comprising or consisting of a catalytic material (KM) and/or the susceptor (S) is a solid loose material (FLM) consisting of the catalytic material (KM) or has an outer layer (AS) comprising or consisting of a catalytic material (KM), **characterized in that** the susceptor (S) has a roughness of 30 to 200 µm.

5. The process according to any of the preceding claims, wherein the inductive field (IF) has a frequency of 50 to 600 kHz and/or a current of 4.0 to 20 amperes.

6. The process according to any of the preceding claims, wherein the process is conducted continuously and the average dwell time of the organic molecules (OM) in step b) is 1.0 to 16 min/g LOHC.

7. The process according to any of the preceding claims, wherein the organic molecules (OM) are liquid and/or have been dissolved in a solvent.

8. The process according to any of the preceding claims, wherein the maximum temperature of the organic molecules (OM) within the reaction vessel (RB) is not higher than 400°C.

9. Reaction vessel (RB) which
i) has been provided with a device for generating an inductive field (IF); and
ii) comprises a solid loose material (FLM),
wherein the solid loose material (FLM)
- is such that it can couple magnetically to the inductive field (IF) and
- consists of a metal (M) or metal alloy (ML) which can couple magnetically to the inductive field (IF) or has an outer layer (Sch) comprising or consisting of a metal (M) or metal alloy (ML),
and
- the reaction vessel is such that the solid loose material (FLM) can couple to the inductive field (IF) and
- the reaction vessel has an inlet for supply of organic molecules (OM),
the reaction vessel is configured such that the solid loose material (FLM) comes into contact with the organic molecules (OM) after they have been supplied, the reaction vessel and its contents are free of platinum, palladium, rhodium, gold, iridium, titanium, tantalum and ruthenium, and
wherein the solid loose material (FLM) consists of the catalytic material (KM) or the outer layer (Sch) comprises or consists of a catalytic material (KM), wherein the catalytic material (KM) is Cr, V, Zn, Co, Mo, W, Ni, Al, Cu, iron, Fe₂O₃, (CoMoAl)ₓO_{y}, or alloys of Cu, Zn, Cr, Ni, Mo, or iron, for example steels (Cr-Ni steel, CrNiMo steel).

10. Use of solid loose material (FLM) which
- is such that it can couple magnetically to an inductive field (IF) and
- consists of a metal (M) or metal alloy (ML) which can couple magnetically to the inductive field (IF) or has an outer layer (Sch) comprising or consisting of a metal (M) or metal alloy (ML),
- the elements of the solid loose material (FLM) each have a volume of 0.040 cm³ to 16.75 cm³;
for dehydrogenation of organic molecules (OM), wherein the solid loose material (FLM) consists of the catalytic material (KM) or the outer layer (Sch) comprises or consists of a catalytic material (KM), wherein the catalytic material (KM) is Cr, V, Zn, Co, Mo, W, Ni, Al, Cu, iron, Fe₂O₃, (CoMoAl)ₓO_{y}, or alloys of Cu, Zn, Cr, Ni, Mo, or iron, for example steels (Cr-Ni steel, CrNiMo steel).

## Revendications

1. Procédé de déshydrogénation de molécules organiques (OM), présentant les étapes suivantes consistant à
a) introduire les molécules organiques (OM) dans un récipient de réaction (RB), dans lequel le récipient de réaction
i) est pourvu d'un dispositif permettant de générer un champ inductif (IF) ; et
ii) présente un suscepteur (S) pour le champ inductif (IF),
b) appliquer un champ inductif (IF), et faire agir le champ inductif (IF) sur le suscepteur (S) et les molécules organiques (OM),
c) prélever l'hydrogène à partir du récipient de réaction (RB) pendant et/ou après l'étape b),
d) prélever les molécules organiques déshydrogénées (DOM) à partir du récipient de réaction (RB) pendant et/ou après l'étape b), par exemple pendant l'étape c),
dans lequel le suscepteur (S) comporte un suscepteur actif (AS) ou est composé de celui-ci,
- le suscepteur actif (AS) est de nature à pouvoir être couplé magnétiquement au champ inductif (IF), et le récipient de réaction est de nature à ce que
- le suscepteur actif (AS) puisse être couplé au champ inductif (IF),
- le suscepteur (S) entre en contact avec les molécules organiques (OM), et
- le récipient de réaction et son contenu sont exempts de platine, de palladium, de rhodium, d'or, d'iridium, de titane, de tantale et de ruthénium,
dans lequel le suscepteur (S) est un matériau en vrac solide (FLM) ou un suscepteur statique (RS),
dans lequel le suscepteur statique (RS) contient un matériau catalytique (KM) ou en est composé, ou le suscepteur statique (RS) est réalisé en tant que support pour le matériau catalytique (KM), dans lequel le matériau catalytique (KM) ne contient pas de platine, de palladium, de rhodium, d'or, d'iridium, de titane, de tantale et pas de ruthénium,
dans lequel le matériau en vrac solide (FLM) est composé du matériau catalytique (KM) ou présente une couche extérieure (Sch) qui contient un matériau catalytique (KM) ou en est composée, dans lequel le matériau catalytique (KM) correspond à Cr, V, Zn, Co, Mo, W, Ni, Al, Cu, du fer, Fe₂O₃, (CoMoAl)ₓO_{y} ou à des alliages de Cu, Zn, Cr, Ni, Mo ou de fer, par exemple à des aciers (acier Cr-Ni, acier CrNiMo).

2. Procédé selon la revendication 1, dans lequel les éléments du matériau en vrac solide (FLM) présentent respectivement un volume de 0,040 cm³ à 16,75 cm³.

3. Procédé selon la revendication 1 ou 2, dans lequel les éléments du matériau en vrac solide (FLM) présentent une couche extérieure (Sch), qui présentent une couche extérieure (Sch) qui contient un matériau catalytique (KM) ou en est composée, et un noyau intérieur (IK) qui contient au moins un matériau à changement de phase (PCM) ou en est composé.

4. Procédé selon l'une quelconque des revendications précédentes 1 à 3, dans lequel le suscepteur (S) est un suscepteur statique (RS) qui contient un matériau catalytique (KM) ou en est composé, et/ou le suscepteur (S) est un matériau en vrac solide (FLM) qui est composé du matériau catalytique (KM) ou présente une couche extérieure (AS) qui contient un matériau catalytique (KM) ou en est composée, **caractérisé en ce que** le suscepteur (S) présente une rugosité de 30 à 200 µm.

5. Procédé selon l'une quelconque des revendications précédentes, dans lequel le champ inductif (IF) présente une fréquence de 50 à 600 kHz et/ou une intensité de courant de 4,0 à 20 ampères.

6. Procédé selon l'une quelconque des revendications précédentes, dans lequel le procédé est exécuté en continu, et la durée de séjour moyenne des molécules organiques (OM) à l'étape b) est de 1,0 à 16 min/g LOHC.

7. Procédé selon l'une quelconque des revendications précédentes, dans lequel les molécules organiques (OM) sont liquides et/ou sont dissoutes dans un solvant.

8. Procédé selon l'une quelconque des revendications précédentes, dans lequel la température maximale des molécules organiques (OM) à l'intérieur du récipient de réaction (RB) n'est pas supérieure à 400 °C.

9. Récipient de réaction (RB) qui
i) est pourvu d'un dispositif permettant de générer un champ inductif (IF) ; et
ii) contient un matériau en vrac solide (FLM),
dans lequel le matériau en vrac solide (FLM)
- est de nature à pouvoir être couplé magnétiquement au champ inductif (IF), et
- est composé d'un métal (M) ou d'un alliage de métal (ML) qui peut être couplé magnétiquement au champ inductif (IF) ou présente une couche extérieure (Sch) qui contient un métal (M) ou un alliage de métal (ML) ou en est composée, et
- le récipient de réaction est de nature à permettre au matériau en vrac solide (FLM) d'être couplé au champ inductif (IF), et
- le récipient de réaction présente une entrée pour introduire des molécules organiques (OM),
le récipient de réaction est configuré de telle sorte que le matériau en vrac solide (FLM) entre en contact avec les molécules organiques (OM) après leur introduction,
le récipient de réaction et son contenu sont exempts de platine, de palladium, de rhodium, d'or, d'iridium, de titane, de tantale et de ruthénium, et
dans lequel le matériau en vrac solide (FLM) est composé du matériau catalytique (KM) ou la couche extérieure (Sch) contient un matériau catalytique (KM) ou en est composée, dans lequel le matériau catalytique (KM) correspond à du Cr, V, Zn, Co, Mo, W, Ni, Al, Cu, du fer, Fe₂O₃, (CoMoAl)ₓO_{y} ou à des alliages de Cu, Zn, Cr, Ni, Mo ou de fer, par exemple à des aciers (acier Cr-Ni, acier CrNiMo).

10. Utilisation d'un matériau en vrac solide (FLM) qui
- est de nature à pouvoir se coupler magnétiquement à un champ inductif (IF), et
- est composé d'un métal (M) ou d'un alliage de métal (ML) qui peut être couplé magnétiquement au champ inductif (IF) ou présente une couche extérieure (Sch) qui contient un métal (M) ou un alliage de métal (ML) ou en est composée,
- les éléments du matériau en vrac solide (FLM) présentent respectivement un volume de 0,040 cm³ à 16,75 cm³ ;
pour la déshydrogénation de molécules organiques (OM),
dans lequel le matériau en vrac solide (FLM) est composé du matériau catalytique (KM), ou la couche extérieure (Sch) contient un matériau catalytique (KM) ou en est composée, dans lequel le matériau catalytique (KM) correspond à du Cr, V, Zn, Co, Mo, W, Ni, Al, Cu du fer, Fe₂O₃, (CoMoAl)ₓO_{y}, ou à des alliages de Cu, Zn, Cr, Ni, Mo ou de fer, par exemple à des aciers (acier Cr-Ni, acier CrNiMo).
